# EUROPEAN PATENT SPECIFICATION

(11) **EP 2 891 780 B1**
(45) Date of publication and mention of the grant of the patent: **10.01.2018**
(21) Application number: 13832951.1
(22) Date of filing: 30.08.2013
(51) Int. Cl.: F02B 25/04, F02B 15/00, F02B 23/10, F02D 41/02, F02M 21/02

(54) **UNIFLOW SCAVENGING TWO-CYCLE ENGINE**
ZWEITAKTMOTOR MIT LÄNGSSPÜLUNG
MOTEUR À DEUX TEMPS ÉQUICOURANT À BALAYAGE

(30) Priority: 31.08.2012 JP 2012191122
(43) Date of publication of application: 08.07.2015
(73) Proprietor: IHI Corporation, Tokyo 135-8710 (JP)
(72) Inventor: MASUDA Yutaka, Tokyo 135-8710 (JP); YAMADA Takayuki, Tokyo 135-8710 (JP); HIROSE Takayuki, Tokyo 135-8710 (JP); KUGE Takahiro, Tokyo 135-8710 (JP); YAMADA Takeshi, Tokyo 135-8710 (JP)
(74) Representative: TBK
(86) International application number: PCT/JP2013/073321
(87) International publication number: WO 2014/034847

(56) References cited:
- WO-A1-2008/129111
- DE-A1-102011 003 909
- DE-A1-102011 003 909
- JP-A- S5 472 306
- JP-A- H04 132 857
- JP-A- 2012 154 188
- JP-A- 2012 154 188
- JP-A- 2012 154 189
- JP-A- 2012 154 189

## Description

The present invention relates to a uniflow-scavenging-type two-cycle engine according to the preamble of claim 1 for burning a premixed gas that is generated by injecting a fuel gas to an active gas drawn in from scavenging ports.

Priority is claimed on JP 2012-191122 A1, filed on August 31, 2012.

### Background Art

A uniflow-scavenging-type two-cycle engine (two-stroke engine) used also for an engine of a ship has an exhaust port provided at a first end of its cylinder in the stroke direction of its piston and has scavenging ports provided at a second end of its cylinder in the stroke direction of its piston. When, in the intake (induction) process, an active gas is drawn in from the scavenging ports to a combustion chamber, an exhaust gas generated by the combustion action is exhausted, as if being pushed out, by the drawn in the active gas. At this time, a premixed gas is generated by injecting a fuel gas to the drawn in the active gas, and the generated premixed gas is compressed, to thereby obtain a combustion action. With an explosive pressure generated by the combustion action, the piston reciprocates in the cylinder.

In this uniflow-scavenging-type two-cycle engine, if mixture of the fuel gas and the active gas is insufficient, the concentration of the fuel gas is locally high, leading to a problem such as pre-ignition or exhaustion of unburned gas. Therefore, for example, a structure can be conceived in which a nozzle tube for injecting a fuel gas is provided in scavenging ports, and mixing of a fuel gas and an active gas is started before the active gas is drawn in into a cylinder, to thereby secure the time for mixing the fuel gas with the active gas in the cylinder, as shown in JP 3908855 B.

However, in the structure of JP 3908855 B1 as described above, the opening of the nozzle tube is disposed in the vicinity of an outlet of the scavenging port (inside the cylinder), and the fuel gas merges along the flow of the active gas that has been adjusted to the direction through which the scavenging port extends in the scavenging port. This makes it difficult to advance the mixture of the active gas and the fuel gas after the merge.

DE 10 2011 003 909 A1 shows a generic uniflow-scavenging-type two-cycle engine according to the preamble of claim 1. This engine comprises a cylinder in which a combustion chamber is formed; a piston that slides in the cylinder; a scavenging port that is provided at one end of the cylinder in a stroke direction of the piston and draws in an active gas into the combustion chamber in accordance with a sliding movement of the piston; and a fuel injection section.

JP 2012-154 189 A and JP 2012-145 188 A show further uniflow-scavenging-type two-cycle engines according to the prior art.

### Summary of the invention

It is the object of the present invention to further develop a generic uniflow-scavenging-type two-cycle engine according to the preamble of claim 1 such that mixing efficiency of injected fuel gas with active gas is improved.

The object of the present invention is achieved by a uniflow-scavenging-type two-cycle engine having the features of claim 1.

A further development according to the present invention is shown in the dependent claim.

The fuel injection section may be a fuel injection port opening in each of a pair of wall sections of the cylinder, the wall sections forming the scavenging port.

According to the uniflow-scavenging-type two-cycle engine of the present invention, it is possible to efficiently mix an injected fuel gas with an active gas.

### Brief Description of the Drawings

FIG. 1 is an explanatory diagram showing a general structure of a uniflow-scavenging-type two-cycle engine according to an embodiment.
FIG. 2A is an external view of scavenging ports.
FIG. 2B is an enlarged view of FIG. 2A.
FIG. 3 is a view of an inner circumferential wall of a scavenging port of FIG. 2B from the direction of arrow III.
FIG. 4A is a view of a cross-section of the cylinder, taken along a direction vertical to a stroke direction of a piston, at a position where fuel injection sections are provided.
FIG. 4B is an enlarged view of the cross-section of the cylinder, taken along the direction vertical to the stroke direction of the piston, at the position where the fuel injection sections are provided.
FIG. 5 is an explanatory diagram showing an operation of each control unit.
FIG. 6A shows a cross-sectional view of a cylinder of a uniflow-scavenging-type two-cycle engine according to an explanatory example, taken at a position corresponding to that of FIG. 4A.
FIG. 6B shows a cross-sectional view of the cylinder of the uniflow-scavenging-type two-cycle engine according to the explanatory example, taken at a position corresponding to that of FIG. 4B.

### Description of Embodiments

Hereunder is a detailed description of a preferred embodiment of the present invention with reference to the appended drawings. Dimensions, materials, specific numerical values, and the like shown in the embodiment are merely examples for making the understanding of
the invention easy, and hence, do not limit the present invention unless otherwise specified. In the present specification and the drawings, elements with substantially the same function or structure are denoted by the same reference symbols, and are not repetitiously explained. Furthermore, illustrations of those elements that are not directly related to the present invention are omitted.

### (First embodiment)

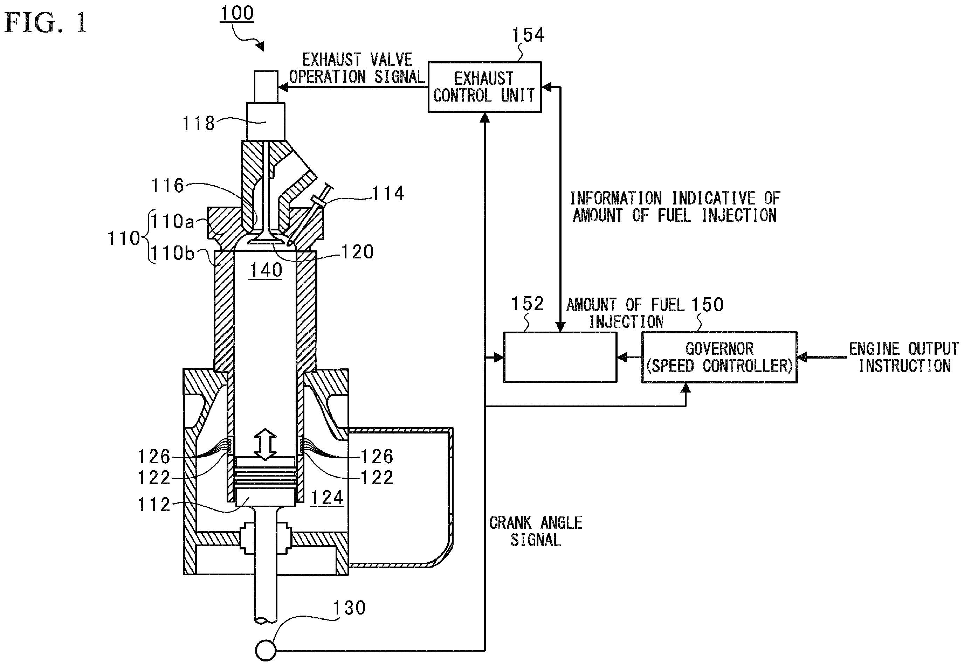

FIG. 1 is an explanatory diagram showing a general structure of a uniflow-scavenging-type two-cycle engine 100 according to an embodiment. The uniflow-scavenging-type two-cycle engine 100 of the present embodiment is used for, for example, ships or the like. To be more specific, the uniflow-scavenging-type two-cycle engine 100 includes: a cylinder 110 (a cylinder head 110a, a cylinder block 110b); a piston 112; a pilot injection valve 114; an exhaust port 116; an exhaust valve drive device 118; an exhaust valve 120; scavenging ports 122; a scavenging room 124; fuel injection sections 126; a rotary encoder 130; and a combustion chamber 140, and is controlled by control units such as a governor (speed controller) 150, a fuel injection control unit 152, and an exhaust control unit 154.

In the uniflow-scavenging-type two-cycle engine 100, the piston 112, which is coupled to a crosshead (not shown in the figure), reciprocates slidably in the cylinder 110 through four sequential processes of: intake (induction), compression, combustion, and exhaust. In this crosshead-type piston 112, it is possible to form a stroke in the cylinder 110 comparatively long, and to cause the crosshead to receive lateral pressure acting on the piston 112. Therefore, it is possible to obtain a high-power output of the uniflow-scavenging-type two-cycle engine 100. Furthermore, because the cylinder 110 and a crank room (not shown in the figure) in which the crosshead is contained are separated from each other, it is possible to prevent deterioration due to contamination even when low-grade fuel oil is used.

The pilot injection valve 114 is provided in the cylinder head 110a above a top dead center of the piston 112, which is a first end of the cylinder 110 in the stroke direction. The pilot injection valve 114 injects a proper amount of fuel oil at a desired time in the engine cycle. The fuel oil is spontaneously ignited by the heat of the combustion chamber 140, which is
surrounded by the cylinder head 110a, the cylinder liner of the cylinder block 110b, and the piston 112, and burns in a short amount of time, to thereby raise the combustion chamber 140 extremely high in temperature. Therefore, it is possible to securely burn the premixed gas including the fuel gas at a desired time.

The exhaust port 116 is an opening provided at the first end of the cylinder 110 in the stroke direction of the piston 112, namely, at the top of the cylinder head 110a above the top dead center of the piston 112. The exhaust port 116 is opened and closed for exhausting the exhaust gas after combustion that has been generated in the cylinder 110. The exhaust valve drive device 118 slides the exhaust valve 120 up and down at predetermined times to open and close the exhaust port 116. Thus, the exhaust gas exhausted via the exhaust port 116 is exhausted to the outside after, for example, it is supplied to the turbine of the supercharger (not shown in the figure).

The scavenging port 122 is a hole that penetrates from an inner circumferential surface (inner circumferential surface of the cylinder block 110b) to an outer circumferential surface at a second end (one end) of the cylinder 110 in the stroke direction of the piston 112. A plurality of scavenging ports 122 are provided over an entire circumference of the cylinder 110. The scavenging ports 122 draw in an active gas into the cylinder 110 in accordance with the sliding movement of the piston 112. The active gas includes oxygen, oxidant such as ozone, or mixture gas of these (air, for example). The scavenging room 124 is filled with an active gas (air, for example) that has been pressurized by the compressor of a supercharger (not shown in the figure). With a difference in pressure between the scavenging room 124 and the cylinder 110, the active gas is drawn in from the scavenging ports 122. The pressure of the scavenging room 124 may be substantially constant. However, if the pressure of the scavenging room 124 changes, the scavenging ports 122 may be provided with a pressure gauge, and other parameters such as an amount of injection of the fuel gas may be controlled in accordance with the measured value.

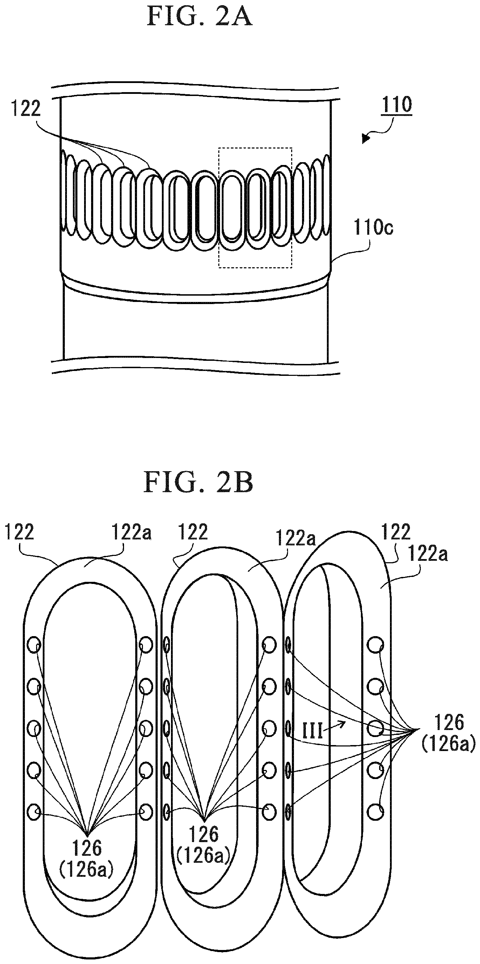

FIG. 2A and FIG. 2B are external views of the scavenging ports 122. FIG. 2B shows an enlarged view of the part of FIG. 2A surrounded by a broken line. As shown in FIG. 2A and FIG. 2B, the scavenging port 122 is formed with a taper 122a along an edge on the side of the outer circumferential surface 110c of the cylinder 110. The scavenging port 122 is for adjusting a flow of the active gas that flows in from the scavenging room 124.

As the fuel injection sections 126, fuel injection ports in communication with fuel injection valves (not shown in the figure) are used. The fuel injection sections 126 are provided for each scavenging port 122 and are open to the tapers 122a on each wall section of the cylinder 110, each pair of wall sections forming each scavenging port 122. Namely, each fuel injection section 126 has opening sections 126a that are open to the tapers 122a of the adjacent scavenging ports 122.

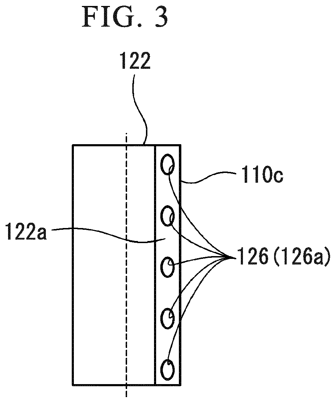

FIG. 3 is a view of the inner circumferential wall of the scavenging port 122 of FIG. 2B from the direction of arrow III. In FIG. 3, a middle position of a width of the scavenging port 122, including the taper 122a, in a penetration direction (in the left-right direction in FIG. 3) is shown with a broken straight line.

As shown in FIG. 3, the opening sections 126a of the fuel injection sections 126 are provided in the scavenging port 122 on a side closer to an outer circumferential surface 110c of the cylinder 110 (a side outer) than the center of the width of the scavenging port 122 of the cylinder 110 in the penetration direction.

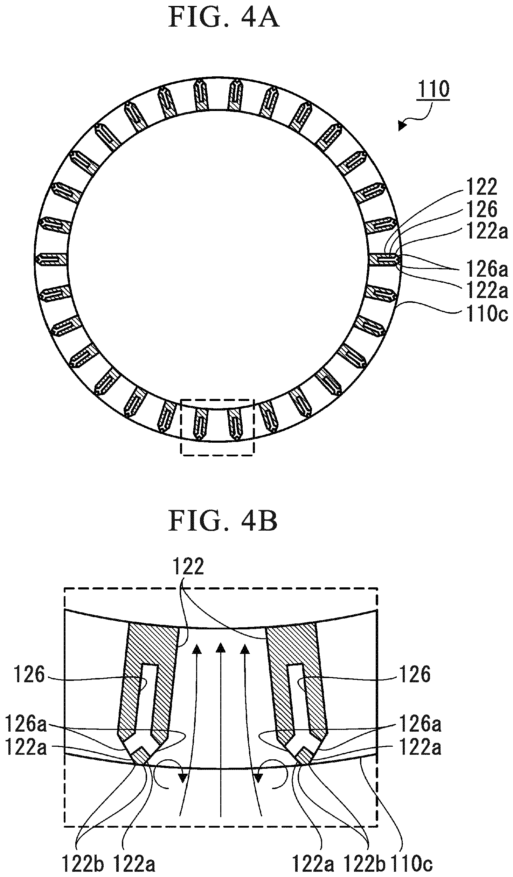

FIG. 4A and FIG. 4B are views of a cross-section of the cylinder 110, taken along a direction orthogonal to a stroke direction of the piston 112, at a position where the fuel injection sections 126 are provided. FIG. 4B shows an enlarged view of the part of FIG. 4A surrounded by a broken line. Furthermore, in FIG. 4B, arrows show flows of the active gas.

The fuel injection sections 126 are in communication with the fuel injection valves (not shown in the figure), as described above. On receiving an instruction from the fuel injection control unit 152, the fuel injection valves inject a fuel gas that is, for example, a gasified LNG (liquefied natural gas). The fuel gas is not limited to LNG, but a gasified version of, for example, LPG (liquefied petroleum gas), light oil, heavy oil, or the like may be used.

Then, the fuel gas is injected from the fuel injection sections 126 toward the active gas that is flowing in the scavenging ports 122.

At this time, if the position of the opening section 126a of the fuel injection section 126 is too close, in the scavenging port 122, to the inner circumferential surface of the wall section of the cylinder 110, the fuel gas merges with the active gas in the scavenging port 122 along the flow of the active gas that has been adjusted to the penetration direction of the scavenging port 122. This makes it difficult to advance the mixture of the active gas and the fuel gas after the merge.

Incidentally, the active gas flowing into the scavenging port 122 is likely to become an eddy current, which troubles a flow of the active gas, especially in the vicinity of an edge 122b on the upstream side of the scavenging port 122.

In the present embodiment, the fuel gas is injected to the part of each scavenging port 122 at which the active gas flows in. Namely, on the upstream side of the flow in the penetration direction of the scavenging port 122, the fuel gas is injected to the active gas. Therefore, with the eddy currents of the active gas in the vicinity of the edges 122b, mixture of the active gas and the fuel gas is promoted.

Furthermore, as the fuel injection section 126, the fuel injection ports opening in the wall sections of the cylinder 110 that form the scavenging port 122 are used. This makes it possible to cause the fuel gas to securely collide against the active gas that flows into the scavenging port 122.

Returning to FIG. 1, the rotary encoder 130 is provided in a crank mechanism (not shown in the figure), and detects an angle signal of the crank (hereinafter, referred to as crank angle signal).

Based on an engine output instruction value that has been input from an upper-level control device and on the number of revolution of the engine that is specified by the crank angle signal from the rotary encoder 130, the governor 150 derives an amount of fuel injection and then outputs the amount to the fuel injection control unit 152.

Based on the information indicative of the amount of fuel injection that has been input from the governor 150 and on the crank angle signal from the rotary encoder 130, the fuel injection control unit 152 controls the fuel injection valves.

Based on the information indicative of the amount of fuel injection from the fuel injection control unit 152 and on the crank angle signal from the rotary encoder 130, the exhaust control unit 154 outputs an exhaust valve operation signal to the exhaust valve drive device 118.

Hereunder is a description of the operation of each control unit in the engine cycle of the uniflow-scavenging-type two-cycle engine 100.

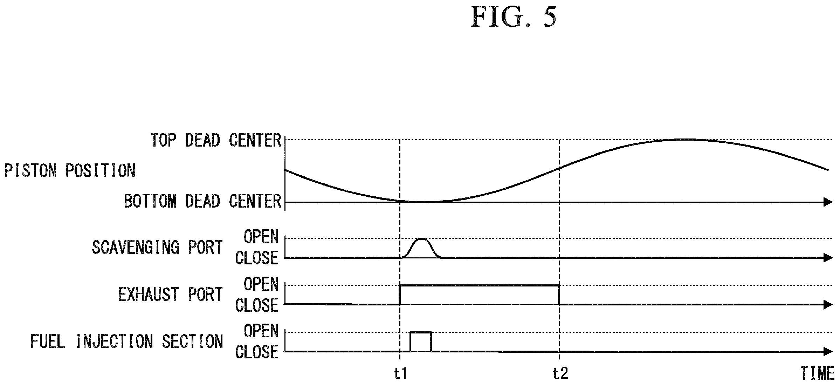

FIG. 5 is an explanatory diagram showing a operation of each control unit. As shown in FIG. 5, in the expansion process after the combustion process, the exhaust port 116 and the scavenging ports 122 are in a closed state, and the combustion chamber 140 (cylinder 110) is filled with an exhaust gas.

When the piston 112 is lowered to be brought close to the bottom dead center due to an explosive pressure produced by the combustion action in the combustion chamber 140, the exhaust control unit 154 opens the exhaust valve 120 via the exhaust valve drive device 118. At the same time, following the sliding movement of the piston 112, the scavenging ports 122 open (t1 shown in FIG. 5). Then, an active gas is drawn in from the scavenging ports 122.

Then, based on the information indicative of the amount of fuel injection that has been input from the governor 150, on the number of revolution of the engine that has been derived from the crank angle signal from the rotary encoder 130, and on other factors, the fuel injection control unit 152 opens the fuel injection valves to cause the fuel gas to be injected from the fuel injection sections 126 into the scavenging ports 122. As a result, the fuel gas is injected to the active gas being drawn in into the scavenging ports 122, which generates a premixed gas in the combustion chamber 140 (cylinder 110).

The premixed gas moves up while forming a swirl for promoting mixture of the active gas and the fuel gas. This causes the exhaust gas in the combustion chamber 140 (cylinder 110) to be pushed out from the exhaust port 116.

Then, in the compression process in which the piston 112 moves up from the bottom dead center toward the top dead center, the fuel injection control unit 152 closes the fuel injection valves to stop the injection of the fuel gas from the fuel injection sections 126 into the scavenging ports 122. In addition, the scavenging ports 122 are closed to stop the intake of the active gas.

At this time the exhaust control unit 154 maintains the exhaust valve 120 in an open state. Therefore, with the upward movement of the piston 112, the exhaust gas in the combustion chamber 140 (cylinder 110) continues to be exhausted from the exhaust port 116.

After that, when the piston 112 further moves up, the exhaust control unit 154 closes the exhaust valve 120 to close the exhaust port 116 (t2 shown in FIG. 5).

Thus, with the premixed gas burning in the combustion chamber 140, the processes of exhaust, intake, compression, combustion, and expansion are repeated as described above.

### (Explanatory Example)

Subsequently, a fuel injection section 226 of an explanatory example will be described. The explanatory example is different from the embodiment only in the fuel injection section 226. Therefore, constituent elements with structures the same as those of the embodiment will not be repetitiously described here, and only the fuel injection section 226, which is different in configuration, will be described.

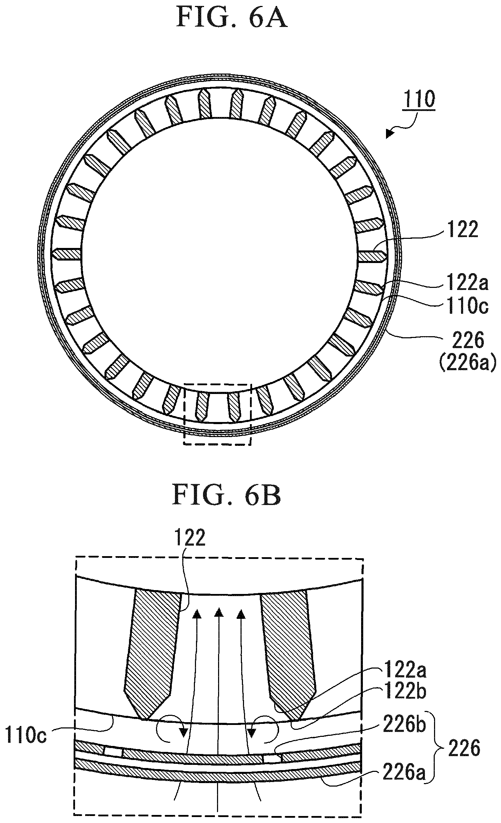

FIG. 6A and FIG. 6B show cross-sectional views of a cylinder 110 of a
uniflow-scavenging-type two-cycle engine of the explanatory example, taken at a position corresponding to that of FIG. 4A and FIG. 4B. FIG. 6B shows an enlarged view of the part of FIG. 6A surrounded by a broken line. In FIG. 6B, arrows show flows of an active gas.

As shown in FIG. 6A, the fuel injection section 226 of the explanatory example is made of an annular pipe 226a that is spaced outwardly from the cylinder 110 in the radial direction of the cylinder 110 so as to surround an outer circumference of the cylinder 110.

As shown in FIG. 6B, the pipe 226a is provided with opening sections 226b, through which an internal area and an external area of the pipe 226a are in communication with each other, at positions each opposed to each scavenging port 122.

The fuel injection section 226 (pipe 226a) is in communication with a fuel injection valve (not shown in the figures). When the fuel injection valve is opened, a fuel gas having flowed in the internal area of the pipe 226a is injected from the opening sections 226b toward the scavenging ports 122.

Namely, similarly to the fuel injection sections 126 of the embodiment, the fuel injection section 226 of the explanatory example is provided in the scavenging port 122 on a side closer to an outer circumferential surface 110c of the cylinder 110 (a side outer) than a center of the width of the scavenging port 122 of the cylinder 110 in the penetration direction.

As shown in FIG. 6B, the opening sections 226b are open toward tapers 122a on wall sections of the cylinder 110 that form the scavenging ports 122. Therefore, the fuel gas is injected from the fuel injection sections 226 toward the active gas flowing through the scavenging ports 122.

At this time, on the upstream side of the flow in the penetration direction of each scavenging port 122, the fuel gas is injected to the active gas. Therefore, with the eddy currents of the active gas in the vicinity of the edges 122b on the upstream side of each scavenging port 122, mixture of the active gas and the fuel gas is promoted.

While a preferred embodiment of the present invention has been described with reference to the appended drawings, the present invention is not limited to this embodiment, i.e. it should be understood that any modifications and alterations which belong to the scope of the present invention as defined in the appended claims can be conceived.

### Industrial applicability

The present invention provides a uniflow-scavenging-type two-cycle engine that injects a fuel gas to an active gas drawn in from a scavenging port, to thereby efficiently mix the injected fuel gas with the active gas and burn a generated premixed gas.

### Description of Reference Signs

100: uniflow-scavenging-type two-cycle engine
110: cylinder
112: piston
118: exhaust valve drive unit
120: exhaust valve
122: scavenging port
126, 226: fuel injection section

## Claims

1. A uniflow-scavenging-type two-cycle engine (100), comprising:
a cylinder (110) in which a combustion chamber (140) is formed;
a piston (112) that slides in the cylinder (110);
a scavenging port (122) that is provided at one end of the cylinder (110) in a stroke direction of the piston (112) and draws in an active gas into the combustion chamber (140) in accordance with a sliding movement of the piston (112); and
a fuel injection section (126, 226),
**characterized in that**
the fuel injection section (126, 226) is provided in the scavenging port (122) on an outer side of the cylinder (110) with respect to a center of a width of the scavenging port (122) in a penetration direction and injects a fuel gas to the active gas drawn in into the scavenging port (122),
a taper (122a) is formed on an outer circumferential surface (110c) of the cylinder (110) and is adjacent to the scavenging port, and
the fuel injection section (126, 226) has an opening section (126a) that is located in the taper (122a).

## Patentansprüche

1. Brennkraftmaschine (100) der Gleichstromspülungsbauart, die Folgendes aufweist:
einen Zylinder (110), in dem eine Brennkraftmaschine (140) ausgebildet ist;
einen Kolben (112), der in dem Zylinder (110) gleitet;
einen Spülanschluss (122), der an einem Ende des Zylinders (110) in einer Hubrichtung des Kolbens (112) vorgesehen ist und ein Aktivgas in die Brennkammer (140) in Übereinstimmung mit einer Gleitbewegung des Kolbens (112) ansaugt; und
einen Kraftstoffeinspritzbereich (126, 226),
**dadurch gekennzeichnet, dass**
der Kraftstoffeinspritzbereich (126, 226) in dem Spülanschluss (122) an einer äußeren Seite des Zylinders (110) in Bezug auf eine Mitte einer Breite des Spülanschlusses (122) in einer Durchdringungsrichtung vorgesehen ist und ein Kraftstoffgas zu dem Aktivgas, das in den Spülanschluss (122) angesaugt wird, einspritzt,
ein Konus (122a) an einer Außenumfangsfläche (110c) des Zylinders (110) ausgebildet ist und benachbart zu dem Spülanschluss angeordnet ist, und
der Kraftstoffeinspritzbereich (126, 226) einen Öffnungsbereich (126a) hat, der in dem Konus (122a) angeordnet ist.

## Revendications

1. Moteur à deux temps (100) de type à balayage longitudinal comprenant :
un cylindre (110) dans lequel est formée une chambre de combustion (140) ;
un piston (112) qui coulisse dans le cylindre (110) ;
un orifice de balayage (122) qui est prévu au niveau d'une extrémité du cylindre (110) dans une direction de course du piston (112) et aspire un gaz actif dans la chambre de combustion (140) selon un mouvement de coulissement du piston (112) ; et
une section d'injection de carburant (126, 226),
caractérisé en ce qui :
la section d'injection de carburant (126, 226) est prévue dans l'orifice de balayage (122) sur un côté externe du cylindre (110) par rapport à un centre d'une largeur de l'orifice de balayage (122) dans une direction de pénétration et injecte un gaz combustible dans le gaz actif aspiré dans l'orifice de balayage (122),
une conicité (122a) est formée sur une surface circonférentielle externe (110c) du cylindre (110) et est adjacente à l'orifice de balayage, et
la section d'injection de carburant (122, 226) a une section d'ouverture (126a) qui est positionnée dans la conicité (122a).
